# EUROPÄISCHE PATENTANMELDUNG

(11) **EP 1 538 538 A2**
(43) Veröffentlichungstag der Anmeldung: **08.06.2005**
(21) Anmeldenummer: 04028613.0
(22) Anmeldetag: 02.12.2004
(51) Int. Cl.: G06F 17/30, G06F 17/60

(54) **Verfahren und System zum Erzeugen/Bearbeiten einer strukturierten Gesamtdatei**

(30) Priorität: 05.12.2003 DE 10356905
(71) Anmelder: Vodafone Holding GmbH, 40213 Düsseldorf (DE)
(72) Erfinder: Böcking, Stefan, Dr.-Ing., 41464 Neuss (DE); Hessler, Armin, Dr., 47839 Krefeld (DE)
(74) Vertreter: Müller, Thomas, Dipl.-Ing.

(57) **Zusammenfassung**

Es wird ein Verfahren sowie ein System zum elektronischen Erzeugen/Bearbeiten einer strukturierten Gesamtdatei (10), beispielsweise einer Website, beschrieben, wobei diese aus Informationsdateien (16, 21, 22, 23, 24) und/oder aus Dateiunterstrukturen (11, 12, 13, 14, 15) mit Informationsdateien gebildet ist/wird. Erfindungsgemäß ist vorgesehen, dass die elektronische Erzeugung/Bearbeitung der strukturierten Gesamtdatei (10) dezentral durch wenigstens eine Nutzergruppe erfolgt, die aus wenigstens zwei Gruppenmitgliedern gebildet ist, derart, dass Informationsdateien (21, 24) und/oder Dateiunterstrukturen vorgesehen sind, die jeweils von einem einzigen Gruppenmitglied (19; 20) elektronisch erzeugt/bearbeitet werden, dass Informationsdateien (22, 23) und/oder Dateiunterstrukturen vorgesehen sind, die jeweils gemeinsam von zwei oder mehr Gruppenmitgliedern (19, 20) elektronisch erzeugt/bearbeitet werden, dass die Informationsdateien (16, 21, 22, 23, 24) und/oder die Dateiunterstrukturen (11, 12, 13, 14, 15) den Gruppenmitgliedern von einer Vergabeinstanz zugeordnet werden und dass die von jedem Gruppenmitglied erzeugten/bearbeiteten Informationsdateien (16, 21, 22, 23, 24) und/oder Dateiunterstrukturen (11, 12, 13, 14, 15) elektronisch zu der strukturierten Gesamtdatei (10) verknüpft werden.

## Beschreibung

Die vorliegende Erfindung betrifft ein Verfahren sowie ein System zum elektronischen Erzeugen/Bearbeiten einer strukturierten Gesamtdatei, wobei diese aus Informationsdateien und/oder aus Dateiunterstrukturen mit Informationsdateien gebildet ist/wird.

Bei einer solchen strukturierten Gesamtdatei kann es sich beispielsweise um eine Website oder ein Webportal handeln. Derartige strukturierte Gesamtdateien präsentieren Inhalte und Anwendungen (Applikationen) für externe Adressaten (Internet) oder für interne Adressaten (Intranet).

Die Inhalte und Anwendungen werden durch ein sogenanntes "Back-End"-Managementsystem aufrechterhalten und aktualisiert. Üblicherweise besteht ein solches Managementsystem für Websites aus Managementkomponenten für die einzelnen Seiten (Webpages), die Navigation und für die Inhalte (Content).

Websites sind in der Regel in Form einer hierarchischen Baumstruktur organisiert und aufgebaut, wobei die Baumstruktur auch die Navigationsstruktur der Website darstellt. Eine Website besitzt üblicherweise eine einzige Navigationsstruktur, die durch ein Navigations-Management-Subsystem gemanagt wird. Schließlich werden die Inhalte und Anwendungen durch ein Inhalts-Management-Subsystem kontrolliert und aktualisiert.

Bisher basieren die Managementsysteme für Websites auf "zentralisierten Konzepten" (centralized concepts) oder auf "zentralisierten Konzepten mit Delegation" (centralized with delegation).

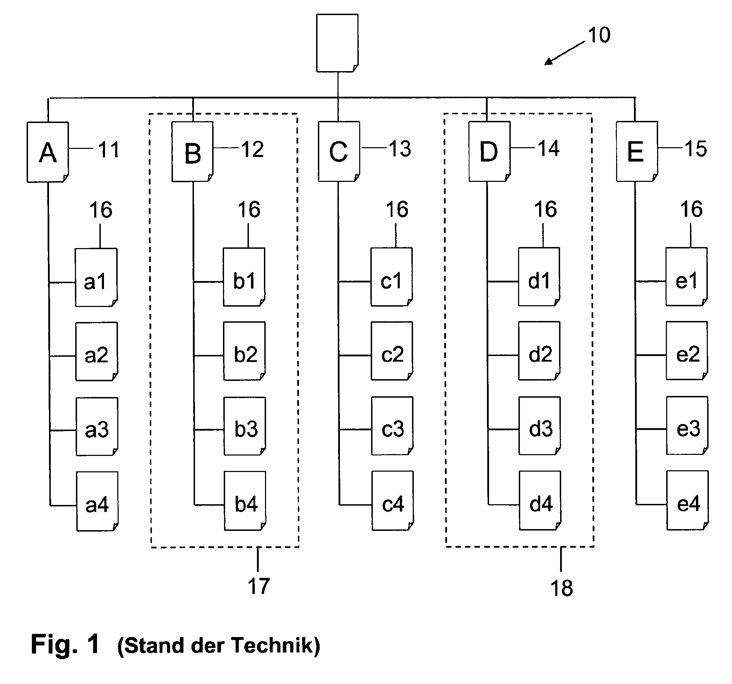

"Zentralisiert" bedeutet, dass ein einzelner Inhaber/Verantwortlicher die Seiten (Webpages), die Navigation und den Inhalt der Website managt. "Zentralisiert mit Delegation" bedeutet, dass die Administration von Dateiunterstrukturen (Subtrees) der strukturierten Gesamtdatei, insbesondere von Unterstrukturen der Navigation und der dazugehörigen Seiten (Informationsdateien) sowie der Inhalte komplett an eine andere Partei delegiert wird, die dann die Erlaubnis für bestimmte Ausführungen hat. Ein solches bekanntes System ist in Figur 1 dargestellt in wird im Rahmen der Figurenbeschreibung näher erläutert.

Nachteilig bei den bekannten Systemen ist, dass die Erzeugung/Bearbeitung der strukturierten Gesamtdateien, insbesondere wenn diese umfangreich sind, uneffizient und aufwendig ist. Bei den "zentralisierten" Lösungen muss die Gesamtarbeit aller Arbeiten von einer einzelnen Person, nämlich dem Inhaber/Verantwortlichen durchgeführt werden. Das ist insbesondere bei umfangreichen Websites sehr zeitintensiv. Bei den Lösungen "zentralisiert mit Delegation" ist die Handlungsaktivität für Teile der Website auf Dritte übertragen. Meist muss der Verantwortliche die delegierten Dateiunterstrukturen dann doch selbst in der Website implementieren. Außerdem kann es zu Abstimmungsproblemen etwa bei den Inhalten in unterschiedlichen Dateiunterstrukturen kommen, insbesondere wenn diese von unterschiedlichen Personen betreut werden.

Der vorliegenden Erfindung liegt die Aufgabe zugrunde, ein verbessertes Verfahren sowie ein verbessertes System bereitzustellen, mit dem die zuvor beschriebenen Nachteile wirksam vermieden werden können.

Die Aufgabe wird erfindungsgemäß gelöst durch das Verfahren mit den Merkmalen gemäß dem unabhängigen Patentanspruch 1 sowie das System mit den Merkmalen gemäß dem unabhängigen Patentanspruch 18. Weitere Vorteile, Merkmale, Details, Aspekte und Effekte der Erfindung ergeben sich aus den Unteransprüchen, der Beschreibung sowie den Zeichnungen. Merkmale und Details, die im Zusammenhang mit dem erfindungsgemäßen Verfahren beschrieben sind, gelten dabei selbstverständlich auch im Zusammenhang mit dem erfindungsgemäßen System, und umgekehrt.

Der vorliegenden Erfindung liegt die Erkenntnis zugrunde, dass die Erzeugung/Bearbeitung der strukturierten Gesamtdatei nicht mehr zentralisiert, wie bei den aus dem Stand der Technik bekannten Lösungen, erfolgt, sondern dass die Erzeugung/Bearbeitung der strukturierten Gesamtdatei nunmehr dezentral durchgeführt wird. Die Erzeugung/Bearbeitung erfolgt erfindungsgemäß durch eine Nutzergruppe, die aus wenigstens zwei Gruppenmitgliedern gebildet ist.

Gemäß dem ersten Aspekt der Erfindung wird ein Verfahren zum elektronischen Erzeugen/Bearbeiten einer strukturierten Gesamtdatei bereitgestellt, wobei diese aus Informationsdateien und/oder aus Dateiunterstrukturen mit Informationsdateien gebildet ist/wird. Das Verfahren ist erfindungsgemäß dadurch gekennzeichnet, dass die elektronische Erzeugung/Bearbeitung der strukturierten Gesamtdatei dezentral durch wenigstens eine Nutzergruppe erfolgt, die aus wenigstens zwei Gruppenmitgliedern gebildet ist, derart, dass Informationsdateien und/oder Dateiunterstrukturen vorgesehen sind, die jeweils von einem einzigen Gruppenmitglied elektronisch erzeugt/bearbeitet werden, dass Informationsdateien und/oder Dateiunterstrukturen vorgesehen sind, die jeweils gemeinsam von zwei oder mehr Gruppenmitgliedern elektronisch erzeugt/bearbeitet werden, dass die Informationsdateien und/oder Dateiunterstrukturen den Gruppenmitgliedern von einer Vergabeinstanz zugeordnet werden und dass die von jedem Gruppenmitglied erzeugten/bearbeiteten Informationsdateien und/oder Dateiunterstrukturen elektronisch zu der strukturierten Gesamtdatei verknüpft werden.

Mit der vorliegenden Erfindung wird es möglich, die unterschiedlichsten Typen von strukturierten Gesamtdateien zu erzeugen und zu bearbeiten, so dass die Erfindung nicht auf bestimmte Dateitypen beschränkt ist. Beispielsweise kann das erfindungsgemäße Verfahren zum Erstellen und/oder Bearbeiten einer Website, eines Webportals oder dergleichen ausgebildet sein. Dabei kann die Website entweder für den externen Gebrauch (Internet) oder aber auch für den internen Gebrauch (Intranet) ausgelegt sein. Natürlich sind auch Kombinationen denkbar.

Die strukturierte Gesamtdatei kann aus unterschiedlichen Bestandteilen aufgebaut sein. Zum einen sind Informationsdateien vorhanden, bei denen es sich im Falle einer Website um die einzelnen Inhaltsseiten (Webpages) der Website handelt. Weiterhin können Dateiunterstrukturen vorgesehen sein, die wiederum über Informationsdateien verfügen. Wenn die strukturierte Gesamtdatei über ihre Struktur auch die gesamte Navigationsstruktur bildet, so bilden die Dateiunterstrukturen jeweils Navigationsunterstrukturen.

Die strukturierte Gesamtdatei kann im einfachsten Fall aus einer einzelnen Hierarchieebene bestehen, in der nur Informationsdateien vorhanden sind. Die strukturierte Gesamtdatei kann aber auch eine erste Hierarchieebene aufweisen, in der entweder Informationsdateien und Dateiunterstrukturen gemeinsam oder aber nur Dateiunterstrukturen vorgesehen sind. In den Dateiunterstrukturen, in denen sich ja auch Informationsdateien befinden, können dann weiterer Hierarchieebenen implementiert sein. In den beiden letztgenannten Fällen können strukturierte Gesamtdateien mit beliebig vielen Hierarchieebenen erzeugt/bearbeitet werden. In allen genannten Fällen können strukturierte Gesamtdateien mit beliebigem Umfang und insbesondere mit beliebig vielen Informationsdateien erzeugt/bearbeitet werden.

Die elektronische Erzeugung/Bearbeitung der strukturierten Gesamtdatei erfolgt erfindungsgemäß dezentral durch wenigstens eine Nutzergruppe, die aus wenigstens zwei Gruppenmitgliedern gebildet ist. Das erfindungsgemäße Verfahren gestattet das Management einer strukturierten Gesamtdatei, beispielsweise einer einzelnen Website beliebiger Größe und Komplexität, insbesondere das Management bezüglich der Navigation und der Inhalte, gemeinsam durch eine unabhängige Gruppe von Nutzern. Dabei ist die Erfindung nicht auf eine bestimmte Art und Größe der Nutzergruppe beschränkt. Auch können die einzelnen Gruppenmitglieder unterschiedlich ausgebildet sein.

Beispielsweise kann vorgesehen sein, dass es sich bei den Gruppenmitgliedern um Einzelpersonen und/oder Nutzergruppen handelt. Auch ist es möglich und zulässig, dass die Anzahl der Gruppenmitglieder einer Nutzergruppe verändert werden kann, indem neue Gruppenmitglieder aufgenommen und/oder existierende Gruppenmitglieder ausgeschlossen werden.

Die Nutzergruppe kann vorteilhaft durch einen Nutzer mit besonderen Rechten (Administrator) gemanagt werden. Dessen Aufgabe besteht dann unter anderem darin, der Nutzergruppe neue Gruppenmitglieder hinzuzufügen, existierende Gruppenmitglieder aus der Nutzergruppe zu entfernen oder aber die Informationsdateien und/oder Dateiunterstrukturen (Navigationsbereiche) festzulegen, die von den einzelnen Gruppenmitgliedern erzeugt/bearbeitet werden können. Bei dem Nutzer mit besonderen Rechten handelt es sich vorteilhaft um einen Bestandteil der Nutzergruppe.

Erfindungsgemäß sind Informationsdateien und/oder Dateiunterstrukturen vorgesehen, die jeweils von einem einzigen Gruppenmitglied elektronisch erzeugt/bearbeitet werden. Weiterhin sind auch Informationsdateien und/oder Dateiunterstrukturen vorgesehen, die jeweils gemeinsam von zwei oder mehr Gruppenmitgliedern elektronisch erzeugt/bearbeitet werden.

Zur Bearbeitung einer Informationsdatei gehört insbesondere, dass deren Inhalte von dem/den entsprechenden Gruppenmitglied(ern) verändert werden können. Zu diesem Zweck kann beispielsweise jede Informationsdatei wenigstens ein Dateimodul aufweisen, wobei die Dateimodule einer Informationsdatei von einem oder mehreren Gruppenmitgliedern elektronisch erzeugt/bearbeitet werden.

Zur Bearbeitung einer Dateiunterstruktur gehört insbesondere, dass die Navigationsstruktur von dem/den Gruppenmitglied(ern) verändert werden kann, dass neue Informationsdateien erzeugt und in der Dateiunterstruktur plaziert werden können, dass in der Dateiunterstruktur befindliche Informationsdateien bearbeitet werden können und dergleichen.

Die Informationsdateien und/oder Dateiunterstrukturen werden den Gruppenmitgliedern von einer Vergabeinstanz zugeordnet. Dabei erzeugt/bearbeitet jedes Gruppenmitglied seine eigenen Informationsdateien und/oder Dateiunterstrukturen, die jeweils eine Untermenge der kompletten strukturierten Gesamtdatei bilden.

Die Erfindung ist nicht auf bestimmte Arten beschränkt, wie die Vergabeinstanz ausgebildet sein soll, oder wie eine Zuordnung erfolgen soll. Nachfolgend werden hierzu zwei nicht ausschließliche Beispiele beschrieben.

Beispielsweise kann vorgesehen sein, dass die Vergabeinstanz in einer zentralen Rechnereinheit implementiert ist und dass die Informationsdateien und/oder Dateiunterstrukturen den Gruppenmitgliedern von der Vergabeinstanz automatisch zugeordnet werden. In diesem Fall kann es sich bei der Vergabeinstanz beispielsweise um geeignete Programmittel oder dergleichen handeln. In einem solchen Fall kann beispielsweise vorgesehen sein, dass ein Nutzer mit besonderen Rechten (Administrator) die einzelnen Gruppenmitglieder der Nutzergruppe, etwa mit unterschiedlichen Zugriffsmöglichkeiten und Zugriffsrechten, in der Vergabeinstanz implementiert. Die Vergabeinstanz ordnet dann automatisch einzelne Informationsdateien und/oder Dateiunterstrukturen den einzelnen Gruppenmitgliedern zu.

Ebenso ist es auch möglich, dass das Gruppenmitglied mit den besonderen Rechten als Vergabeinstanz fungiert und die Informationsdateien und/oder die Dateiunterstrukturen definiert und diese den einzelnen Gruppenmitgliedern zuweist. Auch in diesem Fall erfolgt die eigentliche Zuordnung insbesondere elektronisch, indem beispielsweise für das entsprechende Gruppenmitglied Zugriffsmöglichkeiten geschaffen werden, beispielsweise durch Vergabe bestimmter Benutzernamen und Passworte, mit denen die Informationsdateien und/oder Dateiunterstrukturen gesichert sind.

Die von jedem Gruppenmitglied erzeugten/bearbeiteten Informationsdateien. und/oder Dateiunterstrukturen werden elektronisch zu der strukturierten Gesamtdatei verknüpft.

Vorteilhaft kann die strukturierte Gesamtdatei eine Baumstruktur aufweisen, wobei der Startpunkt einer Dateiunterstruktur in der Wurzel der Baumstruktur oder in einem beliebigen Knoten der Baumstruktur ausgebildet sein kann. Wenn es sich bei der strukturierten Gesamtdatei um eine Website mit einem Navigationsbaum handelt, kann eine Navigationsunterstruktur (Dateiunterstruktur) beispielsweise mit der Wurzel des Navigationsbaums der Website starten, was als absolute virtuelle Navigation bezeichnet wird. Die Navigationsunterstruktur kann aber auch an jedem anderen Knoten des Navigationsbaums der Website beginnen, was als relative virtuelle Navigation bezeichnet wird. Beispielsweise kann vorgesehen sein, dass absolute virtuelle Navigationen nur durch die Vergabeinstanz oder das Gruppenmitglied mit den besonderen Rechten definiertet werden. Die relative virtuelle Navigation kann beispielsweise durch jedes Gruppenmitglied definiert werden, welches dafür erforderliche Rechte hat, etwa solche, um das Management einer Dateiunterstruktur an eine dritte Partei zu delegieren.

Nachfolgend werden beispielhaft einige Systemvoraussetzungen beschrieben, mit denen ein solches Verfahren durchgeführt werden könnte. Dabei handelt es sich jedoch um rein exemplarische Ausführungen, so dass die Erfindung nicht auf die genannten Beispiele beschränkt ist.

So kann beispielsweise vorgesehen sein, dass die strukturierte Gesamtdatei auf einer zentralen Rechnereinheit abgelegt wird, dass jedem Gruppenmitglied eine Endeinrichtung zugeordnet ist, die zumindest zeitweilig mit der zentralen Rechnereinheit kommuniziert und dass die Informationsdateien und/oder Dateiunterstrukturen mittels der Endeinrichtung(en) elektronisch erzeugt/bearbeitet werden. Dabei kann die zentrale Rechnereinheit als Einzelrechner, als Rechnernetzwerk oder dergleichen ausgebildet sein. Ebenso ist die Erfindung nicht auf bestimmte Ausgestaltungsformen für die Endeinrichtungen beschränkt. Hierbei kann es sich beispielsweise um stationäre Rechner (Personal Computer), um mobile Rechner (Laptops, Notebooks), um sogenannte PDAs (Personal Digital Assistant), um sogenannte Webpads und dergleichen handeln. Natürlich ist es grundsätzlich auch denkbar, dass es sich bei den Endgeräten, bei entsprechender Ausgestaltung der strukturierten Gesamtdatei, um Mobiltelefone oder dergleichen handelt.

Die elektronische Erzeugung/Bearbeitung der Informationsdateien und/oder der Dateiunterstrukturen mittels der Endeinrichtungen kann innerhalb der zentralen Rechnereinheit erfolgen. Das bedeutet, dass die strukturierte Gesamtdatei auf der zentralen Rechnereinheit abgelegt ist, dass die einzelnen Gruppenmitglieder über ihre Endeinrichtungen Zugriff auf die zentrale Rechnereinheit und die darauf abgelegte strukturierte Gesamtdatei nehmen, etwa durch ein entsprechendes Einlog-Verfahren mit Verifizierung und Authentifizierung, und dass die Bearbeitung der strukturierten Gesamtdatei auf der zentralen Rechnereinheit erfolgt.

In anderer Ausgestaltung ist auch möglich, dass die elektronische Erzeugung/Bearbeitung der Informationsdateien und/oder der Dateiunterstrukturen in den Endeinrichtungen erfolgt und dass die Informationsdateien und/oder Dateiunterstrukturen von den Endeinrichtungen auf die zentrale Rechnereinheit übertragen und dort elektronisch zur strukturierten Gesamtdatei verknüpft werden. In diesem Fall erfolgt die Bearbeitung zunächst unabhängig von der strukturierten Gesamtdatei auf den jeweiligen Endeinrichtungen der Nutzer. Sobald die Bearbeitung abgeschlossen ist, wird die fertiggestellte Informationsdatei und/oder Dateiunterstruktur von den Endeinrichtungen zur zentralen Rechnereinheit übertragen und dort elektronisch in die strukturierte Gesamtdatei eingefügt beziehungsweise implementiert.

Vorteilhaft kann vorgesehen sein, dass wenigstens eine Informationsdatei und/oder wenigstens eine Dateiunterstruktur und/oder wenigstens ein Bestandteil einer Dateiunterstruktur mit Mitteln zur Zugangsbeschränkung verknüpft sind und dass nur solche Gruppenmitglieder mit einer Zugangsberechtigung eine solche Informationsdatei und/oder Dateiunterstruktur erzeugen/bearbeiten können.

In weiterer Ausgestaltung kann die Zugriffsmöglichkeit auf Informationsdateien und/oder Dateiunterstrukturen durch Dritte, die nicht der Nutzergruppe angehören, von wenigstens einem Gruppenmitglied, das Zugriff auf die entsprechenden Informationsdateien und/oder Dateiunterstrukturen hat, festgelegt werden. Der entsprechende Nutzer kann somit eine Zielgruppe für die strukturierte Gesamtdatei oder für Teile der strukturierten Gesamtdatei, insbesondere für solche, die ihm zugeordnet sind, festlegen.

Die wie vorstehend beschriebene strukturierte Gesamtdatei weist Informationsdateien und/oder Dateiunterstrukturen auf, die auf unterschiedliche Weise ausgebildet sein können.

Beispielsweise kann wenigstens eine Informationsdatei und/oder wenigstens eine Dateiunterstruktur als sogenannte geschlossene Informationsdatei beziehungsweise Dateiunterstruktur ausgebildet sein, wobei nur jeweils ein einziges Gruppenmitglied der Nutzergruppe, welches Zugriffsrechte auf die geschlossene(n) Informationsdatei(en) und/oder Dateiunterstruktur(en) hat, diese erzeugen/bearbeiten kann. Nur der berechtigte Nutzer ist somit in der Lage, die Informationsdateien und/oder Dateiunterstrukturen zu bearbeiten, indem er etwa neue Informationsdateien in eine Dateiunterstruktur einfügt oder bereits existierende Informationsdateien entfernt, indem er bestehende Informationsdateien verändert, beispielsweise aktualisiert, indem er etwa einzelne Dateimodule der Informationsdatei oder diese in ihrer Gesamtheit bearbeitet, und dergleichen.

Vorteilhaft kann auch vorgesehen sein, dass wenigstens eine Informationsdatei und/oder wenigstens eine Dateiunterstruktur als offene Informationsdatei beziehungsweise Dateiunterstruktur ausgebildet ist und dass jeweils zwei oder mehr Gruppenmitglieder der Nutzergruppe, die Zugriffsrechte auf die offene(n) Informationsdatei(en) und/oder Dateiunterstruktur(en) haben, diese - gemeinschaftlich - erzeugen/bearbeiten können. Hierbei handelt es sich um sogenannte geteilte (shared) Informationsdateien und/oder Dateistrukturen, wobei die geteilten Informationsdateien und/oder Dateistrukturen von einer Anzahl von Gruppenmitgliedern erzeugt/bearbeitet/entfernt werden, die zumindest eine Untermenge von Nutzern bilden, die Zugriff auf die entsprechenden Informationsdateien und/oder Dateiunterstrukturen haben. Eine geschlossene Informationsdatei/Dateiunterstruktur ist somit eine offene Informationsdatei/Dateiunterstruktur, bei der der Nutzer das einzige Gruppenmitglied mit einer entsprechenden Zugangsberechtigung ist.

Einzelne Gruppenmitglieder können "fremde" Informationsdateien und/oder Dateiunterstrukturen erzeugen/bearbeiten, sofern es sich dabei um offene Informationsdateien/Dateiunterstrukturen handelt und die entsprechenden Gruppenmitglieder Teile einer entsprechenden Zugriffsgruppe auf die entsprechenden Informationsdateien/Dateiunterstrukturen sind.

In weiterer Ausgestaltung kann vorgesehen sein, dass die Dateimodule von offenen Informationsdatei(en) nur von demjenigen Gruppenmitglied bearbeitet werden können, welches die Dateimodule auch erzeugt hat. Das kann im Falle einer offenen Informationsdatei beispielsweise bedeuten, dass verschiedene Gruppenmitglieder mit entsprechender Zugangsberechtigung Dateimodule für die Informationsdatei erstellen, dass ein Dateimodul einer solchen offenen Informationsdatei jedoch nur von demjenigen Gruppenmitglied bearbeitet oder entfernt werden kann, das dieses Dateimodul auch tatsächlich erzeugt hat. Dies hat den Vorteil, dass Informationsdateien, beispielsweise vom Inhalt her, sehr komplexe oder anspruchsvolle Dateimodule beinhalten können, wobei gleichzeitig sichergestellt ist, dass nur dasjenige Gruppenmitglied mit den erforderlichen Kenntnissen, welches das Dateimodul ja erstellt hat, das Dateimodul auch bearbeiten kann. Auf diese Weise sind unbeabsichtigte oder fehlerhafte Bearbeitungen ausgeschlossen.

Vorzugsweise kann die strukturierte Gesamtdatei in ihrer Gesamtheit auf einer Anzeigeeinrichtung der Endeinrichtung eines jedes Gruppenmitglied darstellbar sein oder dargestellt werden. Jedes Gruppenmitglied hat somit stets den Gesamtüberblick über die strukturierte Gesamtdatei, ohne dass das Gruppenmitglied Zugriff auf alle Bereiche haben muss. Die strukturierte Gesamtdatei besteht ja aus Informationsdateien und/oder Dateiunterstrukturen, auf die das entsprechende Gruppenmitglied Zugriff hat und aus Informationsdateien und/oder Dateiunterstrukturen, auf die andere Gruppenmitglieder Zugriff haben. Dennoch ist es für die Arbeit eines jeden Gruppenmitglieds oftmals sinnvoll oder erforderlich, diese im Gesamtkontext der strukturierten Gesamtdatei zu sehen.

Das wie vorstehend beschriebene erfindungsgemäße Verfahren gestattet es einer Nutzergruppe mit verschiedenen Gruppenmitgliedern auf unabhängige Weise dezentral eine einzelne strukturierte Gesamtdatei, etwa eine Website, zu erzeugen/bearbeiten, wobei obendrein noch die Möglichkeit geboten ist, dass unterschiedlichen Adressaten unterschiedliche Ansichten beziehungsweise Inhalte der strukturierten Gesamtdatei zugänglich sind.

Gemäß einem weiteren Aspekt der Erfindung wird ein System zum Erzeugen und/oder Bearbeiten einer strukturierten Gesamtdatei bereitgestellt, mit wenigstens einer zentralen Rechnereinheit, mit einer oder mehreren Endeinrichtungen, die Nutzern des Systems zugeordnet sind, wobei die Endeinrichtungen über Verbindungsmittel zumindest zeitweilig mit der zentralen Rechnereinheit kommunizieren und wobei die strukturierte Gesamtdatei, die aus Informationsdateien und/oder aus Dateiunterstrukturen mit Informationsdateien gebildet ist, auf der zentralen Rechnereinheit abgelegt ist. Das System ist erfindungsgemäß dadurch gekennzeichnet, dass es Mittel zur Durchführung des wie vorstehend beschriebenen erfindungsgemäßen Verfahrens aufweist.

Die Erfindung wird nun anhand von Ausführungsbeispielen unter Bezugnahme auf die beiliegenden Zeichnungen näher erläutert. Es zeigen:
- Figur 1: in schematischer Ansicht eine strukturierte Gesamtdatei in Form einer Website, die nach einem herkömmlichen, bekannten Verfahren erzeugt/bearbeitet wird; und
- Figur 2: in schematischer Ansicht eine strukturierte Gesamtdatei in Form einer Website, die durch das erfindungsgemäße Verfahren erzeugt/bearbeitet wird.

In Figur 1 ist eine strukturierte Gesamtdatei 10 in Form einer Website dargestellt, die nach einem herkömmlichen, bekannten Verfahren, im vorliegenden Fall einem sogenannten "zentralisierten Konzept mit Delegation" erzeugt/bearbeitet wird.

Die Website 10 weist eine Reihe von Dateiunterstukturen 11 bis 15 mit unterschiedlichen Thematiken auf. In der Dateiunterstruktur 11 wird die Thematik A behandelt, in der Dateiunterstruktur 12 die Thematik B, in der Dateiunterstruktur 13 die Thematik C, in der Dateiunterstruktur 14 die Thematik D und in der Dateiunterstruktur 15 die Thematik E. Jede Dateiunterstruktur 11 bis 15 verfügt über eine Anzahl von Informationsdateien 16, die die eigentlichen Inhalte der Website 10 darstellen und die jeweils ein oder mehrere Dateimodule aufweisen. Eine solche Informationsdatei 16 stellt im Kontext der Website 10 eine sogenannte Webpage dar.

Die einzelnen Informationsdateien 16 weisen auf die jeweilige Thematik der dazugehörigen Dateiunterstruktur bezogene Inhalte auf. Im Zusammenhang mit der Dateiunterstruktur 11 mit der Thematik A weisen die Informationsdateien 11 beispielsweise auf diese Thematik bezogene Informationen a1 bis a4 auf. Ähnlich verhält es sich mit den Dateiunterstrukturen 12 bis 15.

Im vorliegenden Ausführungsbeispiel sind der besseren Übersicht halber nur fünf Dateiunterstrukturen mit jeweils vier Informationsdateien dargestellt. Es ist jedoch selbstverständlich, dass die Website wesentlich mehr Dateiunterstrukturen und/oder Informationsdateien aufweisen kann, natürlich auch weniger.

Die im Zusammenhang mit Figur 1 dargestellte Website 10 wird nach dem Prinzip "Zentralisiert mit Delegation" erzeugt/bearbeitet. Das bedeutet, dass zunächst ein einzelner InhaberNerantwortlicher vorhanden ist, der die Website 10 bearbeiten, beispielsweise aktualisieren muss. Dies ist insbesondere bei umfangreichen Websites sehr aufwendig. Wenn die Website zusätzlich noch komplexe Inhalte hat, beispielsweise anspruchsvolle technische Inhalte, ist es für einen einzelnen Inhaber/Verantwortlichen oft nicht mehr möglich, die Website mit einem überschaubaren Maß an Aufwand zu bearbeiten und auf dem aktuellen Stand zu halten.

In dem Beispiel nach Figur 1 werden vom Inhaber/Verantwortlichen daher komplette Dateiunterstrukturen an eine dritte Partei delegiert, die diese Dateiunterstruktur dann erzeugt/bearbeitet. Im vorliegenden Beispiel soll es sich bei der Dateiunterstruktur 12 um eine solche delegierte Dateiunterstruktur 17 und bei der Dateiunterstruktur 14 um eine solche delegierte Dateiunterstruktur 18 handeln. Der Vorteil bei dieser Lösung ist, dass dem Inhaber/Verantwortlichen Arbeit abgenommen wird und dass dieser die Bearbeitung insbesondere komplexer Thematiken an entsprechende Fachleute delegieren kann.

Meist muss der Inhaber/Verantwortliche die delegierten Dateiunterstrukturen 17, 18 dann doch selbst in die Website 10 implementieren. Außerdem kann es zu Abstimmungsproblemen - etwa bei den Inhalten in unterschiedlichen Dateiunterstrukturen - kommen, insbesondere wenn diese von unterschiedlichen Personen betreut werden. Darüber hinaus kann bei einer komplexen Website 10 durchaus auch die Situation auftreten, dass einzelne Inhalte, die grundsätzlich einer bestimmten Thematik und damit einer bestimmten Dateiunterstruktur zuzuordnen sind, dennoch auch Inhalte anderer Dateiunterstrukturen bilden können. Eine derart gestaltete Website ist mit dem in Figur 1 dargestellten Erzeugungs-/Bearbeitungsverfahren nicht mehr ohne weiteres handhabbar.

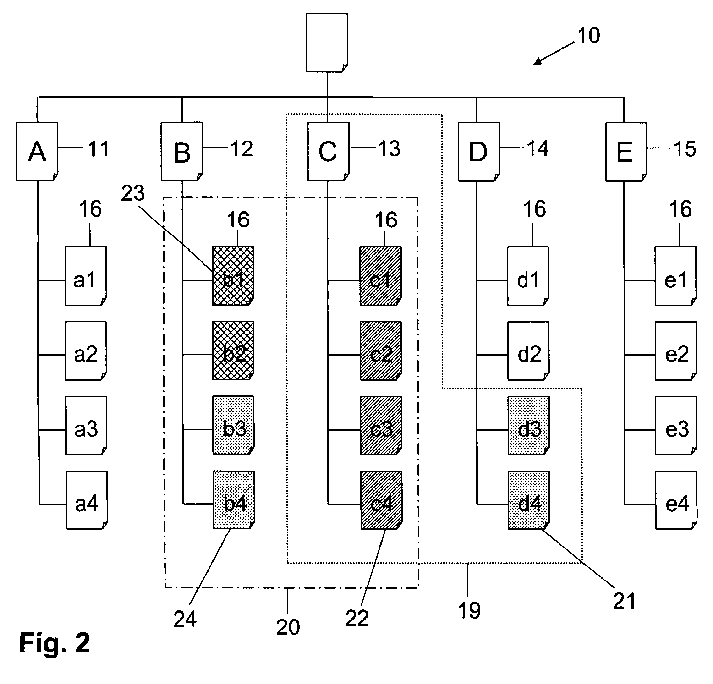

Dies ist jedoch mit dem erfindungsgemäßen Verfahren möglich, das nachfolgend anhand von Figur 2 erläutert wird.

In Figur 2 ist eine Website 10 dargestellt, die in ihrem Grundaufbau bezüglich der Dateiunterstrukturen und Informationsdateien derjenigen in Figur 1 entspricht, weshalb gleiche Elemente mit identischen Bezugsziffern versehen sind und auf die diesbezüglichen vorstehenden Ausführungen Bezug genommen und verwiesen wird.

Die Website 10 gemäß Figur 2 wird nunmehr nicht mehr zentralisiert, sondern dezentralisiert durch eine Nutzergruppe erzeugt/bearbeitet. Die Nutzergruppe besteht aus mehreren Gruppenmitgliedern, im vorliegenden Beispiel einem ersten Nutzer 19 und einem zweiten Nutzer 20. Zusätzlich verfügt die Nutzergruppe über ein Gruppenmitglied mit besonderen Rechten (Administrator), das jedoch Bestandteil der Nutzergruppe ist.

Der Administrator bestimmt die Mitglieder der Nutzergruppe und legt Dateiunterstrukturen und Informationsdateien fest, die den einzelnen Nutzern 19, 20 zugeordnet werden. Er fungiert somit als Vergabeinstanz.

Im Beispiel gemäß Figur 2 soll der erste Nutzer 19 Zugriff auf die gesamte Dateiunterstruktur 13 mit der Thematik C sowie auf einzelne Informationsdateien 16 der Dateiunterstruktur 14 mit der Thematik D haben. Der zweite Nutzer 20 hingegen soll Zugriff auf die Informationsdateien 16 der Dateiunterstruktur 12 mit der Thematik B, nicht jedoch auf deren Navigationsstruktur, haben. Außerdem hat der Nutzer 20 Zugriff auf die Informationsdateien 16 der Dateiunterstruktur 13 mit der Thematik C, nicht jedoch auf deren Navigationsstruktur.

Die Website 10 wird von den einzelnen Gruppenmitgliedern der Nutzergruppe gemeinschaftlich erzeugt/bearbeitet, wobei im vorliegenden Besipiel der besseren Übersicht halber nur zwei Nutzer dargestellt sind. Es ist jedoch selbstverständlich, das die Nutzergruppe mehr Gruppenmitglieder aufweisen kann und dass einzelne Gruppenmitglieder größere Bearbeitungsbereiche zugewiesen bekommen, so das die Website 10 in ihrer Gesamtheit auf die hier beschriebene Weise erzeugt/bearbeitet werden kann.. Dabei ist eine flexible Bearbeitung der Inhalte der Informationsdateien sowie der Dateiunterstrukturen möglich.

Jeder Nutzer erzeugt/bearbeitet diejenigen Informationsdateien und/oder Dateiunterstrukturen, auf die er Zugriff hat. Dabei kann es offene Informationsdateien/Dateiunterstrukturen geben, die gemeinschaftlich von mehreren Nutzern erzeugt/bearbeitet werden können. Ebenso kann es geschlossene Informationsdateien/Dateiunterstrukturen geben, die nur von einzelnen Nutzern mit entsprechender Zugriffsberechtigung erzeugt/bearbeitet werden können.

Im Beispiel gemäß Figur 2 soll der erste Nutzer 19 einige Informationsdateien 16 allein erzeugen/bearbeiten können. Hierbei handelt es sich um zwei Informationsdateien 21 in der Dateiunterstruktur 14. Auch der zweite Nutzer 20 soll einzelne Informationsdateien 16 allein erzeugen/bearbeiten können. Hierbei handelt es sich im Beispiel um zwei Informationsdateien 24 in der Dateiunterstruktur 12. Bei den Informationsdateien 21, 24, die in der Figur mit gepunkteter Fläche dargestellt sind, handelt es sich um geschlossene Informationsdateien 16.

Dem ersten Nutzer 19 ist es weiterhin möglich, die gesamte Dateiunterstruktur 13 zu bearbeiten. Das bedeutet, dass der Nutzer 19 berechtigt ist, neben dem Inhalt auch den Navigationsausgangspunkt der Dateiunterstruktur 13 zu bestimmen und zu verändern.

Weiterhin sollen die Informationsdateien 16 der Dateiunterstruktur 13 als sogenannte offene Informationsdateien 22 ausgebildet sein. Im vorliegenden Beispiel sollen auf die Informationsdateien 22, die in der Figur 2 mit schraffierter Fläche dargestellt sind, sowohl die beiden Nutzer 19 und 20 als auch der Administrator Zugriff haben. In der Dateiunterstruktur 12 befinden sich ebenfalls offene Informationsdateien 23, die in der Figur 2 mit kreuzschraffierter Fläche dargestellt sind. Auf diese Informationsdateien 23 sollen im Beispiel der Nutzer 20 und der Administrator Zugriff haben.

Das erfindungsgemäße Verfahren schafft somit ein Konzept zur gemeinschaftlichen Erzeugung/Bearbeitung und damit eines gemeinschaftlichen Managements einer Website 10 durch eine aufgeteilte, unabhängige Gruppe von Nutzern.

### Bezugszeichenliste

- 10: Strukturierte Gesamtdatei (Internetseite)
- 11: Dateiunterstruktur
- 12: Dateiunterstruktur
- 13: Dateiunterstruktur
- 14: Dateiunterstruktur
- 15: Dateiunterstruktur
- 16: Informationsdatei
- 17: Delegierte Dateiunterstruktur (Stand der Technik)
- 18: Delegierte Dateiunterstruktur (Stand der Technik)
- 19: Nutzer 1
- 20: Nutzer 2
- 21: Geschlossene Informationsdatei (Nutzer 1)
- 22: Offene Informationsdatei
- 23: Offene Informationsdatei
- 24: Geschlossene Informationsdatei (Nutzer 2)

## Patentansprüche

1. Verfahren zum elektronischen Erzeugen/Bearbeiten einer strukturierten Gesamtdatei (10), wobei diese aus Informationsdateien (16, 21, 22, 23, 24) und/oder aus Dateiunterstrukturen (11, 12, 13, 14, 15) mit Informationsdateien gebildet ist/wird, **dadurch gekennzeichnet,**
**dass** die elektronische Erzeugung/Bearbeitung der strukturierten Gesamtdatei (10) dezentral durch wenigstens eine Nutzergruppe erfolgt, die aus wenigstens zwei Gruppenmitgliedern gebildet ist, derart,
**dass** Informationsdateien (21, 24) und/oder Dateiunterstrukturen vorgesehen sind, die jeweils von einem einzigen Gruppenmitglied (19; 20) elektronisch erzeugt/bearbeitet werden,
**dass** Informationsdateien (22, 23) und/oder Dateiunterstrukturen vorgesehen sind, die jeweils gemeinsam von zwei oder mehr Gruppenmitgliedern (19, 20) elektronisch erzeugt/bearbeitet werden,
**dass** die Informationsdateien (16, 21, 22, 23, 24) und/oder die Dateiunterstrukturen (11, 12, 13, 14, 15) den Gruppenmitgliedern von einer Vergabeinstanz zugeordnet werden und
**dass** die von jedem Gruppenmitglied erzeugten/bearbeiteten Informationsdateien (16, 21, 22, 23, 24) und/oder Dateiunterstrukturen (11, 12, 13, 14, 15) elektronisch zu der strukturierten Gesamtdatei (10) verknüpft werden.

2. Verfahren nach Anspruch 1, **dadurch gekennzeichnet, dass** die strukturierte Gesamtdatei (10) auf einer zentralen Rechnereinheit abgelegt wird, dass jedem Gruppenmitglied eine Endeinrichtung zugeordnet ist, die zumindest zeitweilig mit der zentralen Rechnereinheit kommuniziert und dass die Informationsdateien (16, 21, 22, 23, 24) und/oder Dateiunterstrukturen (11, 12, 13, 14, 15) mittels der Endeinrichtung(en) elektronisch erzeugt/bearbeitet werden.

3. Verfahren nach Anspruch 2, **dadurch gekennzeichnet, dass** die elektronische Erzeugung/Bearbeitung der Informationsdateien (16, 21, 22, 23, 24) und/oder der Dateiunterstrukturen (11, 12, 13, 14, 15) mittels der Endeinrichtungen innerhalb der zentralen Rechnereinheit erfolgt.

4. Verfahren nach Anspruch 2 oder 3, **dadurch gekennzeichnet, dass** die elektronische Erzeugung/Bearbeitung der Informationsdateien (16, 21, 22, 23, 24) und/oder der Dateiunterstrukturen (11, 12, 13, 14, 15) in den Endeinrichtungen erfolgt und dass die Informationsdateien (16, 21, 22, 23, 24) und/oder Dateiunterstrukturen (11, 12, 13, 14, 15) von den Endeinrichtungen auf die zentrale Rechnereinheit übertragen und dort elektronisch zur strukturierten Gesamtdatei (10) verknüpft werden.

5. Verfahren nach einem der Ansprüche 1 bis 4, **dadurch gekennzeichnet, dass** jede Informationsdatei (16, 21, 22, 23, 24) wenigstens ein Dateimodul aufweist und dass die Dateimodule einer Informationsdatei von einem oder mehreren Gruppenmitgliedern elektronisch erzeugt/bearbeitet werden.

6. Verfahren nach einem der Ansprüche 1 bis 5, **dadurch gekennzeichnet, dass** wenigstens eine Informationsdatei (16, 21, 22, 23, 24) und/oder wenigstens eine Dateiunterstruktur (11, 12, 13, 14, 15) und/oder wenigstens ein Bestandteil einer Dateiunterstruktur mit Mitteln zur Zugangsbeschränkung verknüpft sind und dass nur solche Gruppenmitglieder mit einer Zugangsberechtigung eine solche Informationsdatei und/oder Dateiunterstruktur erzeugen/bearbeiten können.

7. Verfahren nach einem der Ansprüche 1 bis 6, **dadurch gekennzeichnet, dass** die Zugriffsmöglichkeit auf Informationsdateien (16, 21, 22, 23, 24) und/oder Dateiunterstrukturen (11, 12, 13, 14, 15) durch Dritte, die nicht der Nutzergruppe angehören, von wenigstens einem Gruppenmitglied, das Zugriff auf die entsprechenden Informationsdateien und/oder Dateiunterstrukturen hat, festgelegt wird.

8. Verfahren nach einem der Ansprüche 1 bis 7, **dadurch gekennzeichnet, dass** wenigstens eine Informationsdatei (21, 24) und/oder wenigstens eine Dateiunterstruktur als geschlossene Informationsdatei beziehungsweise Dateiunterstruktur ausgebildet ist und dass nur jeweils ein einziges Gruppenmitglied (19; 20) der Nutzergruppe, welches Zugriffsrechte auf die geschlossene(n) Informationsdatei(en) (21, 24) und/oder Dateiunterstruktur(en) hat, diese erzeugen/bearbeiten kann.

9. Verfahren nach einem der Ansprüche 1 bis 8, **dadurch gekennzeichnet, dass** wenigstens eine Informationsdatei (22, 23) und/oder wenigstens eine Dateiunterstruktur als offene Informationsdatei beziehungsweise Dateiunterstruktur ausgebildet ist und dass jeweils zwei oder mehr Gruppenmitglieder (19, 20) der Nutzergruppe, die Zugriffsrechte auf die offene(n) Informationsdatei(en) (22, 23) und/oder Dateiunterstruktur(en) haben, diese erzeugen/bearbeiten können.

10. Verfahren nach Anspruch 9, soweit auf einen der Ansprüche 5 bis 8 rückbezogen, **dadurch gekennzeichnet, dass** die Dateimodule der offenen Informationsdatei(en) (22, 23) nur von demjenigen Gruppenmitglied bearbeitet werden können, welches die Dateimodule auch erzeugt hat.

11. Verfahren nach einem der Ansprüche 2 bis 10, **dadurch gekennzeichnet, dass** die strukturierte Gesamtdatei (10) in ihrer Gesamtheit auf einer Anzeigeeinrichtung der Endeinrichtung eines jedes Gruppenmitglied darstellbar ist oder dargestellt wird.

12. Verfahren nach einem der Ansprüche 1 bis 11, **dadurch gekennzeichnet, dass** die strukturierte Gesamtdatei (10) eine Baumstruktur aufweist und dass der Startpunkt einer Dateiunterstruktur in der Wurzel der Baumstruktur oder in einem beliebigen Knoten der Baumstruktur ausgebildet ist.

13. Verfahren nach einem der Ansprüche 1 bis 12, **dadurch gekennzeichnet, dass** es sich bei den Gruppenmitgliedern um Einzelpersonen und/oder Nutzergruppen handelt.

14. Verfahren nach einem der Ansprüche 1 bis 13, **dadurch gekennzeichnet, dass** die Anzahl der Gruppenmitglieder verändert werden kann, indem neue Gruppenmitglieder aufgenommen und/oder existierende Gruppenmitglieder ausgeschlossen werden.

15. Verfahren nach einem der Ansprüche 2 bis 14, **dadurch gekennzeichnet, dass** die Vergabeinstanz in der zentralen Rechnereinheit implementiert ist und dass die Informationsdateien (16, 21, 22, 23, 24) und/oder Dateiunterstrukturen (11, 12, 13, 14, 15) den Gruppenmitgliedern von der Vergabeinstanz automatisch zugeordnet werden.

16. Verfahren nach einem der Ansprüche 1 bis 14, **dadurch gekennzeichnet, dass** die Nutzergruppe wenigstens ein Gruppenmitglied mit besonderen Rechten aufweist und dass das Gruppenmitglied mit den besonderen Rechten als Vergabeinstanz fungiert und die Informationsdateien (16, 21, 22, 23, 24) und/oder die Dateiunterstrukturen (11, 12, 13, 14, 15) definiert und diese den einzelnen Gruppenmitgliedern (19, 20) zuweist.

17. Verfahren nach einem der Ansprüche 1 bis 16 zum Erstellen und/oder Bearbeiten einer strukturierten Gesamtdatei (10) in Form einer Website oder eines Webportals.

18. System zum Erzeugen und/oder Bearbeiten einer strukturierten Gesamtdatei, mit wenigstens einer zentralen Rechnereinheit, mit einer oder mehreren Endeinrichtungen, die Nutzern des Systems zugeordnet sind, wobei die Endeinrichtungen über Verbindungsmittel zumindest zeitweilig mit der zentralen Rechnereinheit kommunizieren und wobei die strukturierte Gesamtdatei (10), die aus Informationsdateien (16, 21, 22, 23, 24) und/oder aus Dateiunterstrukturen (11, 12, 13, 14, 15) mit Informationsdateien gebildet ist, auf der zentralen Rechnereinheit abgelegt ist, **dadurch gekennzeichnet, dass** das System Mittel zur Durchführung des Verfahrens nach einem der Ansprüche 1 bis 17 aufweist.
